# EUROPEAN PATENT APPLICATION

(11) **EP 4 807 086 A1**
(43) Date of publication of application: **16.09.2026**
(21) Application number: 26164234.2
(22) Date of filing: 12.03.2026
(51) Int. Cl.: E03C 1/02, B05B 1/16

(54) **SELECTOR UNIT FOR A PULL-OUT HAND SHOWER AND PULL-OUT HAND SHOWER COMPRISING SAID SELECTOR UNIT**

(30) Priority: 13.03.2025 IT 202500005156
(71) Applicant: AMFAG S.R.L., 46040 Casaloldo (Mantova) (IT)
(72) Inventor: BOSIO, Orlando, 46040 Casaloldo (MN) (IT); BOSIO, Andrea, 46040 Casaloldo (MN) (IT)
(74) Representative: Botti & Ferrari S.p.A.

(57) **Abstract**

A selector unit (1) for a pull-out hand shower, comprising: a main body (2); a longitudinal rod (3) and control means (4) of said longitudinal rod (3); wherein said main body (2) is made of several pieces overlapping each other, among which at least one upper piece (23) and one lower piece (24) made by injection moulding.

## Description

### Field of application

The present invention relates to a selector unit for tap assemblies, to be particularly used inside a pull-out hand shower extractable from a fixed support body.

Hand showers of this type, with different features, are used in various mainly domestic settings, for instance in kitchen sinks or in bathroom fixtures.

The above devices find a useful application in the field of taps and tap accessories, particularly kitchen and bathroom taps.

### Prior art

The selector units are components used in tap assemblies, in particular in pull-out hand showers, to allow a user to select several flow modes or may be used as simple shut-off valves.

Such components generally have a fluid path that can be selectively diverted, by handling control means which are externally reachable, towards two distinct outlets, one of which may be possibly closed for being used as a shut-off valve.

Should both outlets be free, it will be possible to use the selector to alternately deliver a concentrated and relatively powerful jet of water, or a softer and more diffuse jet.

Selector units have developed in a relatively standardized manner, and to date they are mostly configured with a single main body, inside which channels for the fluid path are formed. In said main body a selection longitudinal rod is housed, which is kinematically coupled to the control means that are externally reachable by the user.

The several components of the selector unit, and in particular the main body, are made of plastic through moulding techniques, preferably injection moulding.

However, producing the main body as an enbloc has several critical drawbacks.

First of all, given the relative size of the piece, it requires a large mould and relatively high costs.

Moreover, given the need to make various undercut elements inside the main body, on all of the channels that define the fluid path and the sliding guides of the longitudinal rod, the mould is inevitably complex, with the need to introduce various inserts during the moulding operation. On the one hand, this contributes to the relatively high cost of the mould, on the other hand it makes the production more complex with relatively high risks of error. Errors may result in moulding defects, consequently requiring the relative product to be rejected, or even mould breakages, with significant economic consequences.

It should also be considered that the above mentioned moulds are highly specific, given that the main body may vary both according to the diameter of the hand shower which it is designed for, and due to the numerous construction details defined by the type of control means, the configuration and use of the hand shower, and other design choices.

Yet another drawback arises from the need to insert at least one toroidal gasket along the path of the longitudinal rod, particularly in the wall that divides a selection chamber from the cavity into which the control means fit. To allow the insertion of said toroidal gasket, a drawer element is now used, which is inserted after the main body has been moulded. However, this system defines a construction complication and does not allow for ideal positioning of the gasket.

Therefore, the technical problem underlying the present invention is to provide a relatively low-cost selector unit that solves at least some of the previously reported drawbacks and that, in particular, simplifies the moulding operations.

An object of the present invention is to provide a selector unit able to allow a high design flexibility.

Another object of the present invention is to provide a selector unit produced through simplified and less bulky moulds.

Yet another object of the present invention is to provide a selector unit that allows for a correct and easy insertion of the toroidal gasket surrounding the longitudinal rod.

A further object of the present invention is to ensure high production flexibility, namely to provide a selector unit that can be easily modified without completely replacing the mould.

Still a further object is to achieve an overall reduction in the production costs, particularly in the case of multiple series with different details.

### Summary of the invention

The above technical problem is solved by a selector unit for a pull-out hand shower, comprising: a main body; a longitudinal rod and control means of said longitudinal rod; wherein said main body develops from a first end to a second end according to a longitudinal axis; said main body having: a fluid inlet at the first end; a peripheral fluid outlet and a central fluid outlet, both at the second end; inside said main body there being defined: an inlet path; a selection chamber and a peripheral fluid path; wherein said inlet path connects said fluid inlet with the selection chamber; wherein said selection chamber is in fluid communication, directly or through a central outlet path, with said central fluid outlet; wherein said peripheral fluid path connects said selection chamber with said peripheral fluid outlet; said longitudinal rod comprising a shutter and being movable along the longitudinal axis upon driving the control means; said shutter occluding, in a first end-stroke position of the longitudinal rod, the passage between said selection chamber and said peripheral fluid path; wherein said main body comprises at least one upper piece and one lower piece; wherein said upper piece defines therein an upstream portion of the inlet path and an end guide for the longitudinal rod; wherein said lower piece defines therein a downstream portion of the inlet path, the selection chamber and a passage hole for the longitudinal rod.

Therefore, the solution idea is to divide the main body of the selector unit into at least two pieces, separated from each other along a transversal plane, so as to allow the production thereof by injection moulding through less complex moulds, thus reducing the risks of moulding defects and allowing greater flexibility in the production of the assembly through minor embodiments of the moulds themselves.

Preferably, the main body can be individually handled, the several pieces constituting it being stably coupled to each other, for instance through interlocking and/or snap-fit coupling.

Preferably, said upper piece or said lower piece comprises one or more fixing teeth, said fixing teeth snap engaging into respective seats of the other one of said upper piece or said lower piece.

In the preferred embodiment of the invention, the fixing teeth are formed on the lower piece.

Preferably, said fixing teeth comprise at least two side fixing teeth symmetrically arranged with respect to a diametral axis passing through the inlet path and at least one rear tooth arranged on said through-diametral axis.

In a preferred embodiment of the invention, the rear tooth is shorter than the side teeth.

In a preferred embodiment of the invention, the side teeth fit into holes of the upper piece and develop outwards, locking on an upper outer edge of said holes.

In a preferred embodiment of the invention, the rear tooth develops outside the upper piece and fits into a rear recess of the upper piece.

Preferably, said main body further comprises an intermediate piece interposed between said lower piece and said upper piece.

The use of a separate intermediate piece on the one hand allows forming a convenient housing for a toroidal gasket of the longitudinal rod, on the other hand allows a simpler construction of the moulds. Indeed, the need of making a structured cavity for the sliding of the longitudinal rod and the coupling thereto of the control means would force the use of interpenetrating inserts, with a substantial increase in the complexity of the mould and risks of defects or breakage in the event of poorly synchronised extraction.

Preferably, said intermediate piece is held in position between said lower piece and said upper piece by the fixing teeth that extend through said intermediate piece or sideways to said intermediate piece.

Preferably, the selector unit comprises a toroidal gasket placed at said passage hole to form a seal about the longitudinal rod, said toroidal gasket being housed in a gasket seat defined between said lower piece and said intermediate piece.

In a preferred embodiment of the invention, said gasket seat is formed in the lower piece.

Preferably, said intermediate piece defines an intermediate portion of said inlet path.

The control means may be button, slider or lever-shaped.

It should be noted that the main body is substantially cylindrical-shaped, since it is adapted to be inserted into a cylindrical sleeve-shaped containment casing.

Advantageously, said main body may have clips radially protruding to hold the selector unit locked inside a sleeve-shaped containment casing of the pull-out hand shower. This prevents a user from accidentally removing the main body when disassembling the assembly, for instance to replace an internal aerator cartridge.

The clips, relatively complex in shape, may also be made thanks to the relative simplification of the moulds due to the division of the main body into several pieces.

Preferably, said clips are made on the upper piece.

The previously identified technical problem is also solved by a pull-out hand shower comprising an inlet connection, and a selector unit of the above described type, overlapping each other and housed in a sleeve-shaped containment casing.

Advantageously, thanks to the production in separate pieces, the selector unit according to the invention may be easily reconfigured, with details designed to adapt to contingent and specific needs, through minimal reconfigurations of some of the moulds.

Further features and advantages of the present invention will become clearer from the following description of two different embodiments made with reference to the appended drawings, given by way of indicative and non-limiting example.

### Brief description of the drawings

Figure 1 represents a frontal view of the selector unit according to a first embodiment of the present invention;
figure 2 represents a view of the first embodiment of the selector unit sectioned along plane A-A identified in figure 1;
figure 3 represents a perspective view with exploded parts of the selector unit of figures 1 and 2;
figure 4 represents a frontal view of the selector unit according to a second embodiment of the present invention;
figure 5 represents a view of the second embodiment of the selector unit sectioned along plane A-A identified in figure 4;
figure 6 represents a perspective view with exploded parts of the selector unit of figures 4 and 5.

### Detailed description

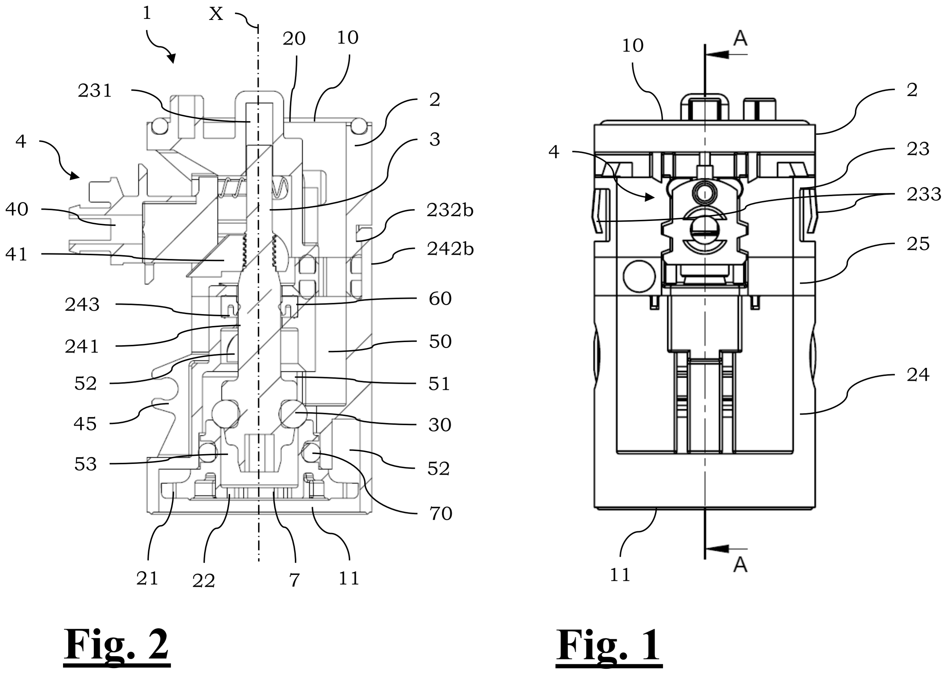

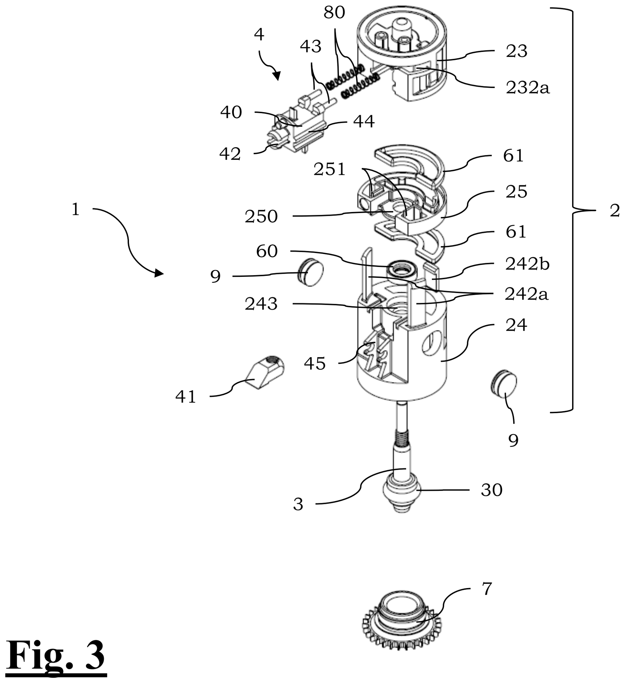

With reference to appended figures 1-3, a first embodiment of a selector unit is generically identified with reference number 1.

The selector unit 1 is a component adapted to be used in a tab assembly, particularly a pull-out hand shower with respect to a tab or fixed body. The pull-out hand shower assembly comprises, in addition to the selector unit of the present invention, at least one housing sleeve, an upstream inlet connector and a possible downstream dispenser body. The inlet connector is coupled to a hose that connects to the tab or fixed body, which is in turn connected to the water supply.

The selector unit 1 allows a user to divert the flow inside the pull-out hand shower between two alternative outlets of the dispenser body or, should one of the inner paths be occluded, to select of an open configuration and a closed configuration of the hand shower.

It should be noted that the selector unit 1 may be marketed independently from the rest of the pull-out shower.

The selector unit 1 is represented in the figures according to a specific and preferred vertical operating configuration; in the rest of the present description, the positions and orientations, relative and absolute, of the various elements that make up the unit, defined by means of terms such as upper and lower, over and below, horizontal and vertical or other equivalent terms, should always be construed with reference to such a configuration. Therefore, in no case should they be given a limiting value.

The selector unit 1 develops according to a vertical longitudinal x-axis and comprises a main body 2, inside which a longitudinal rod 3 and control means 4 of said longitudinal rod 3 are housed.

Said main body 2 develops from a first end 10 to a second end 11 arranged below along said longitudinal x-axis with respect to said upper end 10.

The main body 2, preferably cylindrical-shaped, is made of rigid plastic.

The main body 2 is divided into three separate pieces, overlapping each other according to the longitudinal x-axis: an upper piece 23, an intermediate piece 25 and a lower piece 24.

Said main body 2, according to modes which are per se known, defines a fluid path that develops from a fluid inlet 20, at said first end 10, to a peripheral fluid outlet 21 and a central fluid outlet 22, both at said second end 11.

Said fluid inlet 20 connects to an inlet connector, in turn coupled through a hose to the main body of a tab. Conversely, one or both said peripheral 21 and central 22 fluid outlets fit into a dispenser body that allows dispensing one or more types of flow.

The fluid path defined inside the main body 2 comprises an inlet path 50, a selection chamber 51, a peripheral outlet path 52, and a central outlet path 53.

The inlet path 50 hydraulically connects said fluid inlet 20 with said selection chamber 51.

Said inlet path 50 is L-shaped and comprises an upstream descending section, which develops in the longitudinal direction, parallel but distant from the longitudinal x-axis, and a subsequent downstream radial section that brings the fluid path back towards the longitudinal x-axis until it reaches said selection chamber 51.

In the present invention, the inlet path 50 divides into: an upstream portion, comprising a first part of the descending section and defined by the upper piece 23; an intermediate portion, comprising a second part of the descending section and defined by the intermediate piece 25; and a downstream portion, comprising the final part of the descending section and the subsequent radial section, defined by the lower piece 24.

To avoid flow leaks along the inlet path 50, seal gaskets 61 are arranged between upper piece 23 and intermediate piece 25 and between intermediate piece 25 and lower piece 24. In particular said seal gaskets 61 are housed in dedicated impressions formed on the two opposite sides of the intermediate piece 25. Since the descending section of the flow path 50 is shaped like a circular semi-crown, the seal gaskets 61 and the respective impressions thereof also have a similar shape.

The selection chamber 51 is a cavity obtained inside said lower piece 24, into which the inlet path 50 flows out.

Upwards, the selection chamber 51 has an upper constriction beyond which the peripheral outlet path 52 extends, all defined within the lower piece 24.

Below, the selection chamber 51 is closed by a dispenser cap 7.

Said dispenser cap 7 has an upper cylindrical body, which fits below into the selection chamber 51, with the interposition of a toroidal gasket 70. The upper cylindrical body of the dispenser cap 7 internally defines the central outlet path 53.

Below the cylindrical body, a plate opens radially, which in its internal part, underneath the central outlet path 53, has a hole and defines the central fluid outlet 22. Instead, the peripheral part of the plate has radial teeth which, abutting against an internal cylindrical surface of the lower piece 24, forms a plurality of holes along the outer diameter which define the peripheral fluid outlet 21.

The longitudinal rod 3 slides along the longitudinal x-axis and has a locally thickened body to support a shutter 30, which moves in the selection chamber 51 between the upper constriction and an opposite lower constriction defined by the cylindrical body of the dispenser cap 7.

Therefore, the longitudinal rod 3 is confined between two end-stroke positions: a lower end-stroke position, in which the shutter 30 seal-closes the lower constriction and the fluid is diverted towards the peripheral fluid outlet 21, and an upper end-stroke position, in which the shutter seal-closes the upper constriction and the fluid is diverted towards the central fluid outlet 22.

Above the upper constriction, the longitudinal rod 3 crosses a passage hole 241 that connects the inside of the main body 2 to the outside. Said passage hole 241 is superimposed by a gasket seat 243 that houses a toroidal gasket 60, through which the longitudinal rod 3 slides. The passage hole and the gasket seal 243 are defined in the lower body 24.

Said gasket seat 243 is closed above by a cover 250 which instead is defined in the intermediate piece 25.

The passage hole 241 and the cover 250 define an intermediate guide of the longitudinal rod 3. An end guide 231, defined by a blind cylindrical hole, is instead formed in the upper piece 23. In some cases, when the selector unit 1 is to be returned to rest in a configuration in which it diverts the flow towards the peripheral fluid outlet 21, a compression spring 8 may be inserted into the end guide 231, as visible for instance with reference to the second embodiment described hereinafter.

The intermediate piece 25 is substantially horseshoe-shaped, since it defines the inlet path 50 at the back and two arms 251 provided with longitudinal through-holes at the front.

The lower body 24 comprises two side fixing teeth 242a, relatively longer, arranged symmetrically with respect to a diametral axis passing through the inlet path 50 and a rear tooth 242b, which is shorter, arranged on said through-diametral axis.

The side fixing teeth 242a fit into the through-holes of the arms 251 of the intermediate piece 25, and then radially lock outwards in corresponding seats 232a obtained on the upper piece 23.

The rear tooth 242b extends behind the intermediate piece, fitting into a groove thereof, which is not visible in the appended figures, and then snap-locks with a proper appendix that fits into a rear seat 232b formed on the upper piece 23.

The fixing teeth 242a, 242b thus couple the lower piece 24 to the upper piece 23, locking the intermediate piece 25 interposed therebetween.

Between the cover 250 and the end guide 231 the main body has a front cavity adapted to couple the control means 4 to the longitudinal rod 3.

In the first embodiment herein described, the control means 4 are button-control means and have a button body 40 that is radially movable with respect to the selector unit 1.

The button body 40 has a tilted plane that slides on an opposite tilted plane of a radial connection appendix 41 screwed to the longitudinal rod 3. The radial pressure on the button thus causes a longitudinal displacement of the longitudinal rod, allowing to operate the flow selection.

Frontally the button body 40 has a clip attachment 42 for an outer cap that can be pressed by a user.

At the rear the button body 40 has two guide appendages 43, protruding in the transversal direction, that fit into as many blind transversal holes of the upper piece 23. Return springs 80, adapted to return the button to the extracted position, may be housed in the blind transversal holes.

The button body 40 has transversal guide ribs 44 on the opposite side surfaces thereof, particularly two parallel ribs for each side. Said guide ribs 44 fit into respective guide grooves made on the upper piece 23.

It is also noted that the lower piece 24 has a C-shaped attachment 45 at the front, preferably defined by two parallel C-shaped profiles, which are spaced apart from each other. Said C-shaped attachment 45 allows the coupling of lever control means.

The lower piece 24 has two side holes that put the fluid path 50 in communication with the outside. Said side holes are used to allow making the piece by injection moulding and are closed by corresponding seal caps 9.

The upper piece 23 has two clips 233 protruding sideways that allow holding the assembly of the selector unit 1 in position inside a sleeve-shaped containment casing of the pull-out hand shower.

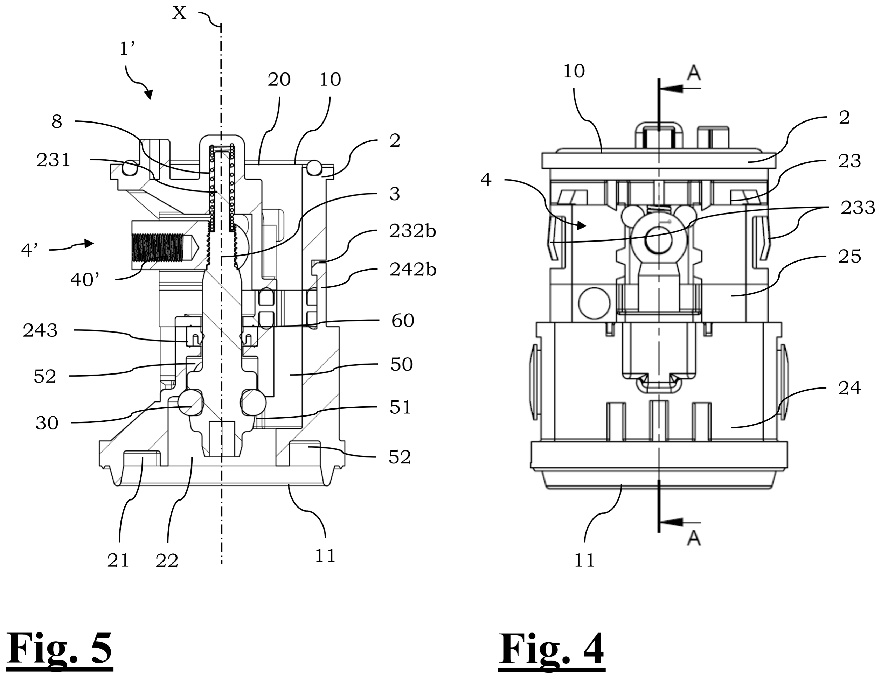

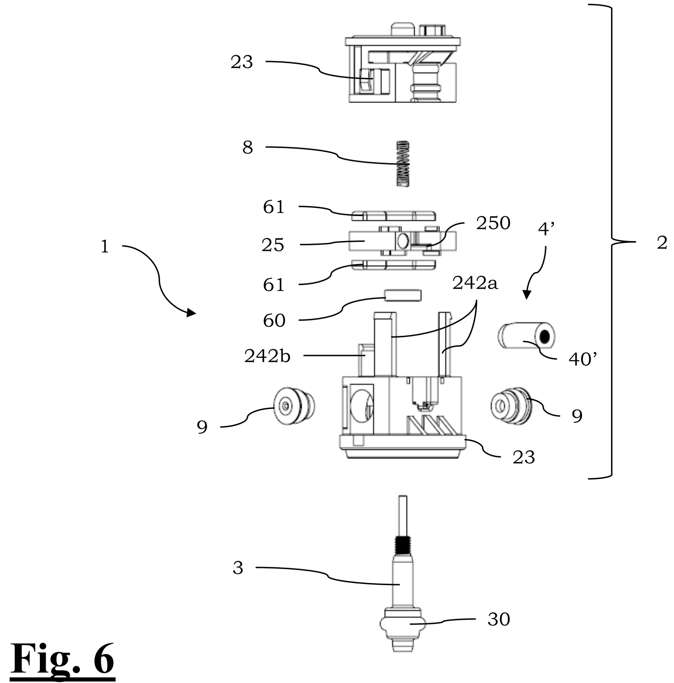

With reference to appended figures 4-6, reference number 1' generically identify a second embodiment of a selector unit.

The second embodiment 1' is substantially analogous to the first one, and just the different parts thereof are described hereinafter. The elements in common with the first embodiment are identified in the figures with the same reference numbers and for their description, reference is made to the previous text.

First of all, the second embodiment 1' differs from the first one in the different configuration of the control means 4', which here are of the longitudinally sliding slider type.

A slider appendix 40', which is directly screwed on the longitudinal rod 3, is shown in the figures. The slider appendix 40' has a radial hole, which is internally threaded for screwing a selector that is outwardly protruding and that may be handled by a user.

The second embodiment 1' still substantially differs in the shorter conformation of the lower piece 24, which in this case does not house the dispenser cap 7. In this embodiment, the dispensing outlets 21 and 22 are extended by a dispenser body, which is per se known and which defines the outer outlets of the pull-out hand shower.

It is also possible for the body installed downstream of the selector unit 1' to close one of the delivery outlets, preferably the central fluid outlet, to determine the operation of the selector as a simple hydraulic switch.

It is also noted that in the second embodiment 1' the front C-shaped attachment is not provided, but it is still possible to provide it.

The second embodiment 1' illustrates how small modifications to the selector unit can be easily achieved by means of minimal changes to the moulds, thus allowing for advantageous production flexibility.

Obviously, a person skilled in the art, in order to meet contingent and specific needs, may make numerous modifications and variations, all included in the scope of protection of the invention as defined by the following claims.

## Claims

1. A selector unit (1, 1') for a pull-out hand shower, comprising:
a main body (2);
a longitudinal rod (3); and
control means (4, 4') of said longitudinal rod (3);
wherein said main body (2) develops from a first end (10) to a second end (11) according to a longitudinal axis (x);
said main body (2) having: a fluid inlet (20) at the first end (10); a peripheral fluid outlet (21) and a central fluid outlet (22), both at the second end (11);
inside said main body (2) there being defined: an inlet path (50); a selection chamber (51) and a peripheral fluid path (52);
wherein said inlet path (50) connects said fluid inlet (20) with the selection chamber (51);
wherein said selection chamber (51) is in fluid communication, directly or through a central outlet path (53), with said central fluid outlet (22);
wherein said peripheral fluid path (52) connects said selection chamber (51) with said peripheral fluid outlet (21);
said longitudinal rod (3) comprising a shutter (30) and being movable along the longitudinal axis (x) upon driving the control means (4);
said shutter (30) occluding, in a first end-stroke position of the longitudinal rod (3), the passage between said selection chamber (51) and said peripheral fluid path (52);
wherein said main body (2) comprises at least one upper piece (23) and one lower piece (24);
wherein said upper piece (23) defines therein an upstream portion of the inlet path (50) and an end guide (231) for the longitudinal rod (3);
wherein said lower piece (24) defines therein a downstream portion of the inlet path (50), the selection chamber (51) and a passage hole (241) for the longitudinal rod (3).

2. The selector unit (1, 1') according to claim 1, wherein said main body (2) can be individually handled, the several pieces (23, 24, 25) constituting it being stably coupled to each other.

3. The selector unit (1, 1') according to claim 2, wherein one of said upper piece (23) or said lower piece (24) comprises one or more fixing teeth (242a, 242b), said fixing teeth (242a, 242b) snap engaging into respective seats (232a, 232b) of the other one of said upper piece (23) or said lower piece (24).

4. The selector unit (1, 1') according to claim 3, wherein said fixing teeth (242a, 242b) comprise at least two side fixing teeth (242a) symmetrically arranged with respect to a diametral axis passing through the inlet path (50) and at least one rear tooth (242b) arranged on said through-diametral axis.

5. The selector unit (1, 1') according to one of the preceding claims, wherein said main body (2) further comprises an intermediate piece (25) interposed between said lower piece (23) and said upper piece (24).

6. The selector unit (1, 1') according to claims 3 and 5, wherein said intermediate piece (25) is held in position between said upper piece (23) and said lower piece (24) by the said fixing teeth (242a, 242b) that extend through said intermediate piece (25) or sideways to said intermediate piece (25).

7. The selector unit (1, 1') according to one of claims 5 or 6, comprising a toroidal gasket (60) placed at said passage hole (241) to form a seal about the longitudinal rod (3), said toroidal gasket (60) being housed in a gasket seat (243) defined between said lower piece (24) and said intermediate piece (25).

8. The selector unit (1, 1') according to one of the preceding claims, wherein said main body (2) has clips (233) radially protruding to hold the selector unit (1, 1') locked inside a sleeve-shaped containment casing of the pull-out hand shower.

9. The selector unit (1, 1') according to claim 8, wherein said clips (233) are made on the upper piece (23).

10. A pull-out hand shower comprising an inlet connection and a selector unit (1, 1') according to one of the preceding claims, overlapping each other and housed in a sleeve-shaped containment casing.
